Europäisches Patentamt

(19) European Patent Office

Office européen des brevets

(11) Publication number: **0 188 322**
**A2**

## (12) EUROPEAN PATENT APPLICATION

(21) Application number: **86300073.3**

(22) Date of filing: **07.01.86**

(51) Int. Cl.⁴: **H 04 Q 7/00**

(30) Priority: **08.01.85 GB 8500452**

(43) Date of publication of application:
**23.07.86 Bulletin 86/30**

(84) Designated Contracting States:
**CH DE FR GB IT LI NL SE**

(71) Applicant: **SINCLAIR RESEARCH LIMITED**
**25 Willis Road**
**Cambridge CB1 2AQ(GB)**

(72) Inventor: **Sinclair, Sir Clive Marles**
**The Stone House 3 Madingley Road**
**Cambridge(GB)**

(72) Inventor: **Beesley, Graham Edgar**
**Upcott Cottage Church Lane Sparsholt**
**Winchester Hampshire SO21 2NJ(GB)**

(72) Inventor: **Baker, John Mark**
**24 Rooksdown Road**
**Winchester Hampshire(GB)**

(74) Representative: **Carpmael, John William Maurice et al,**
**CARPMAELS & RANSFORD 43 Bloomsbury Square**
**London, WC1A 2RA(GB)**

(54) A total communication system and communication apparatus for use in such a system.

(57) Apparatus is provided for use in a two-way cordless telephone communications system for speech and/or data comprising at least one personal communication terminal (PCT) (1) for cordless communication with any one of a plurality of base units (3,3',5,7,13,14). The cordless link between the PCT and the base unit may be any suitable link but is preferably radio. The base units further provide communication to one or more telephone networks (9,10), either by means of radio, in the case of a radio telephone network (9), or land line or both and at least one of the base units (3',5,7) is arranged for use in a radio telephone network, preferably a cellular radio network. Any base unit arranged for use in a radio telephone network uses a transmitter, for communication with the radio telephone network, having a higher output power than the transmitter utilized by a PCT.

./...

EP 0 188 322 A2

FIG. 1a

(a) (b) (c) (d) (e)

Fig 1b

(f)

# A TOTAL COMMUNICATION SYSTEM, AND COMMUNICATION
# APPARATUS FOR USE IN SUCH A SYSTEM

This invention relates to a total communication system, and to apparatus for use in such a system.

With the introduction of the "cellular radio" service in the U.K. in 1985, communication anywhere within the cellular radio service area using a handheld transmitter/receiver becomes a realisable proposition. However, because of the required transmitter powers for satisfactory communication to be established, a really lightweight, low-cost and small-size pocket portable transmitter/receiver is difficult to realise. Also, with the restrictions placed on the cellular radio system user of high call standing charges, high capital equipment costs, and satisfactory coverage only guaranteed for street use, the general view has been that the system is only likely to be used by the mobile business user and not by the consumer.

The present invention seeks to provide an improved communications system.

According to the present invention apparatus for use in a two-way cordless telephone communication system for speech and/or data is provided comprising at least one personal communication terminal (PCT) for cordless communication with any one of a plurality of base units, said base units further providing communication to one or more telephone networks either by means of radio (radio telephone network) or land line or both, wherein at least one of the base units is for use in a radio telephone network and wherein any such base unit uses a transmitter of a higher output power than the transmitter utilized by any said PCT.

Preferably, the PCT is arranged to select communication with one of the said plurality of base units, by means of a user-set or pre-set selection sequence, dependent on the availability of the said

-2-

base units for communication.

Hereafter, the expression "low power communicator" will be used to refer to a PCT having a transmitter which uses an output power less than the transmitter of a base unit, as described above.

Preferably, a plurality of base units is provided, e.g. a first base unit for use in a home or office and connectable just to the public service telephone network (PSTN), a second portable base unit, e.g. for carrying in a brief case and powered by a dry cell battery, for communicating with a cellular or other radio network, a third mobile base unit for use in a motor vehicle and powered by, e.g. a 12-volt battery, a fourth base unit, e.g. of a semi-portable nature, mains powered and connectable to the PSTN and/or for communicating with a cellular or other radio network.

Each of these base units may communicate with more than one LPC either individually or, alternatively, with two or more at the same time.

Preferably also, a base unit which is used as a private branch exchange (PBX) and is connected to the PSTN is provided, e.g. for use in small offices to communicate with a personal LPC for each occupant. If desired, this concept can be enlarged, and, e.g. for large office complexes, several base units may be provided, for example, one for each building, all connected to a master control connected to the PSTN.

Preferably, the base units have different priorities, being allocated codes accordingly and the LPC only communicates through a base unit having a lower priority code if it is unable to communicate through a unit having a higher priority code. Normally, any base unit connected to the PSTN would have the highest priority, since this would be mains powered, and cheaper to use than a unit connected to the cellular network. A mobile unit, which would use the cellular network, but be powered by a vehicle battery, would have the next highest priority, whereas a truly portable unit, powered by dry cells, would have the lowest priority. However, each LPC would preferably have a facility, e.g. through a keypad, to alter the priority if desired, e.g. always to use the cellular system if desired.

Preferably, each base unit searches for a free channel (or an incoming call from an LPC) to establish communication with an LPC for short periods of time at regular intervals, and when communication is established, the respective base unit and LPC "handshake", i.e. communication is established.

Preferably, the cellular base units periodically transmit a signal to test whether they can communicate with an LPC (and hence remain registered on the cellular system). Preferably, an LPC searches for a free channel and then handshakes with a unit of the highest priority to communicate through that unit and, failing such communication, it searches for units of successively lower priorities.

Preferably, when communication is established between an LPC and a base unit of lower priority, then the base unit periodically transmits a routine which includes the priority code of that unit and the LPC responds to that routine to maintain communication but, if the LPC is within range of a base unit of higher priority and the call is an outgoing call from the LPC, then the unit of higher priority will respond to that routine and communication will instead be established through the unit of higher priority.

A preferred embodiment of the invention is now described, by way of example, with reference to the accompanying drawings, in which:-

FIGURES 1a and 1b when combined show a schematic diagram of a total communications system according to the invention;

FIGURE 2 is a block diagram showing the minimal configuration of a base unit;

FIGURE 3 is a flow diagram of the control sequence and operation of the units shown in Figure 1, and

FIGURE 4 is a flow diagram of additional software for the control of a private branch exchange (PBX).

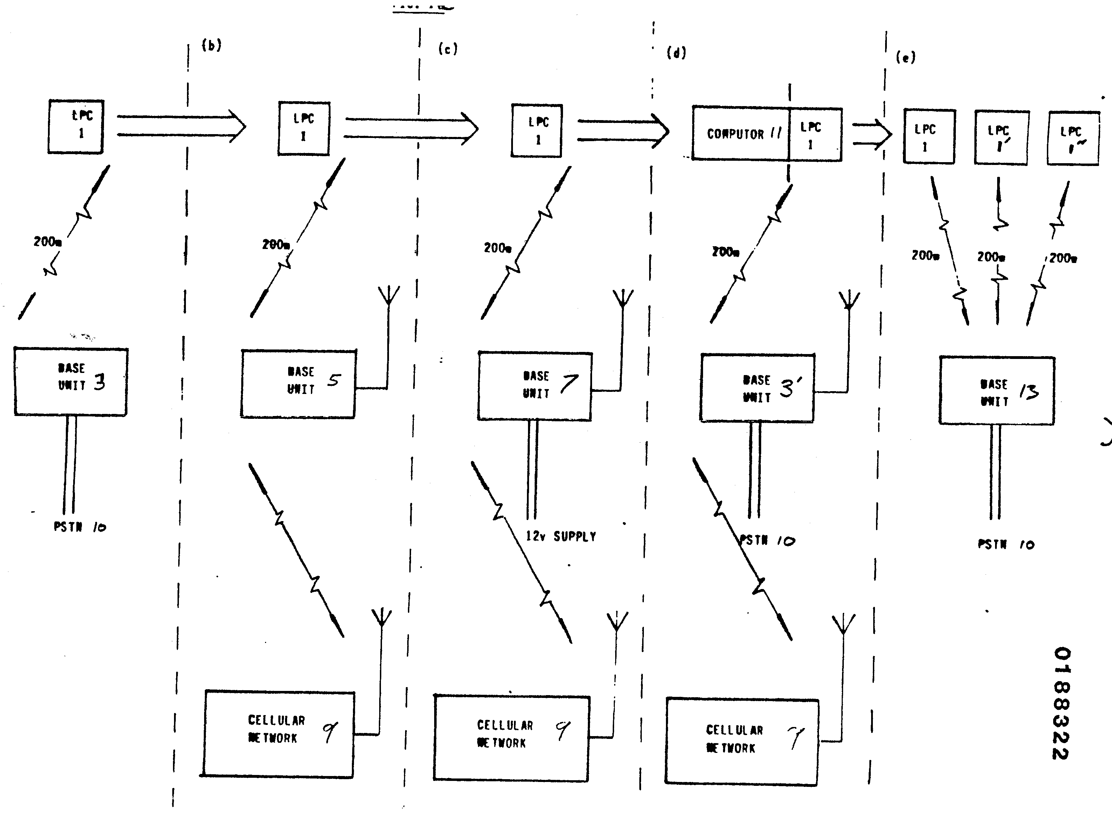

Referring to Figure 1a, the system shown may be built up in stages, so as eventually to comprise the following units:-

(i)    A plurality of low power communicators (LPC)(1), for transmitting and receiving, as with a cordless telephone, operating at 900 MHz, having an operational range of about 200m (10 mW ERP), powered by a primary cell and having an integral antenna.  The LPC operates on 40 channels with 100 KHz channel spacing using a digital modulation format and has a keypad which is a 3x4 array of buttons with two "levels" of keyboard. The functions of the first level are:-

0 to 9 numeric keys

S        send (indicates end of dialled digits)

C        clear (numeric)/call initiate

Second level functions include (obtained by holding key):-

0        call hold

S        register base unit serial numbers

C        invoke cellular operation, i.e. to change priority.

The LPC's are designed to be of lightweight and low- power, e.g. to use of the order of only 50 mW both in the receive and transmit modes, and to be sufficiently small to fit into a small pocket.

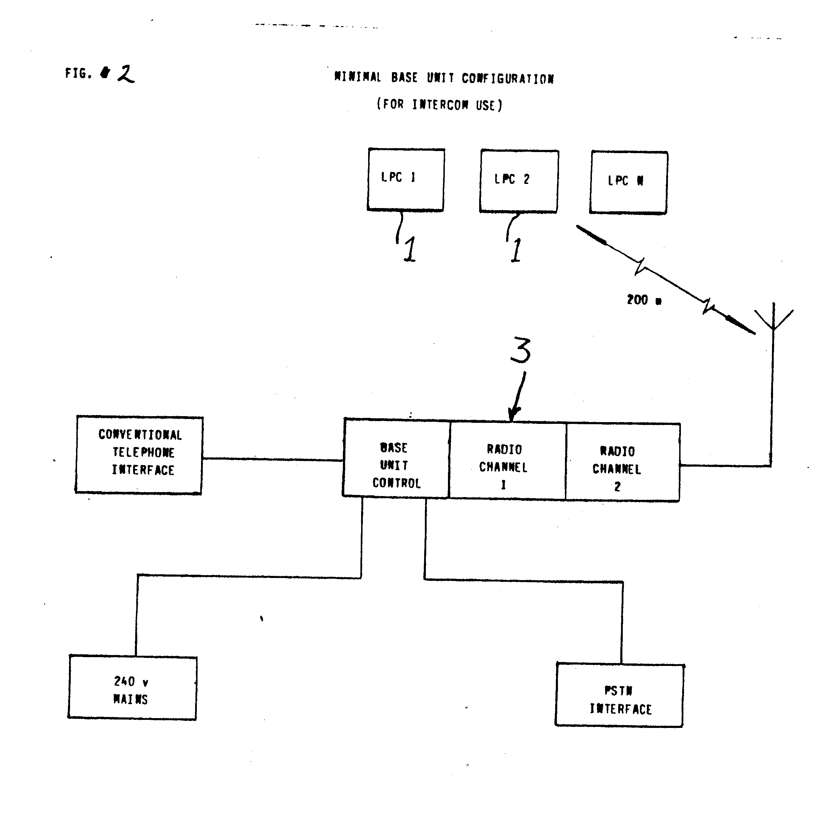

(ii) A standard base unit (3) which is continuously connected to the PSTN. The base unit may look like a conventional telephone with keypads or it may be of a construction which requires no keypads but has a conventional telephone input (see Figure 2). It will also have an antenna, and be powered by a mains supply. The base unit has two radio channel capability to allow the system to be used as an intercom between the LPC's (1) and like the LPC (1) it operates at 900 MHz, has approximately 40 channels at 100 kHz spacing and a maximum transmit power of 10 mW ERP. The standard base unit 3 would normally replace the standard telephone in a house, or be complementary to it.

(iii) A transportable base unit (5) which could be carried, for example, in a pocket or briefcase, has its own battery supply and can communicate with the cellular radio network (9) - or any other radio system if so designed. It is of the 5 watt class 2 transportable type.

(iv) A mobile base unit (7) which is permanently fixed in a motor vehicle and is powered by the vehicle battery, e.g. a 12-volt battery. The mobile unit (7) is of the 10 watt class 1 type with no external wiring except for the power supply and an antenna.

(v) A further standard base unit 3', similar to the unit 3, which would normally be located at a place of work, and would be connected to the PSTN, but also has the capability of communicating with the cellular radio network 9 (or another radio network). This unit 3 (or for that matter any of the others) could be used to communicate with a remote terminal or computer (11), via a modified LPC (1).

(vi) The base unit 3 can also be used as a private branch exchange (PBX) (13), e.g. in a medium size office.

(vii) Alternatively, the base units (3) can be slightly modified, as shown at (14), and be connected to a master control unit (15), so as to provide a larger PBX for use, for example, in a factory complex.

Obviously, the PBX's can communicate with a plurality of LPC's (one would be provided for each individual in the office or factory), which additional LPC's are identified as 1', 1", etc.

The system is specifically designed for use with the cellular radio network (9) in conjunction with the PSTN.

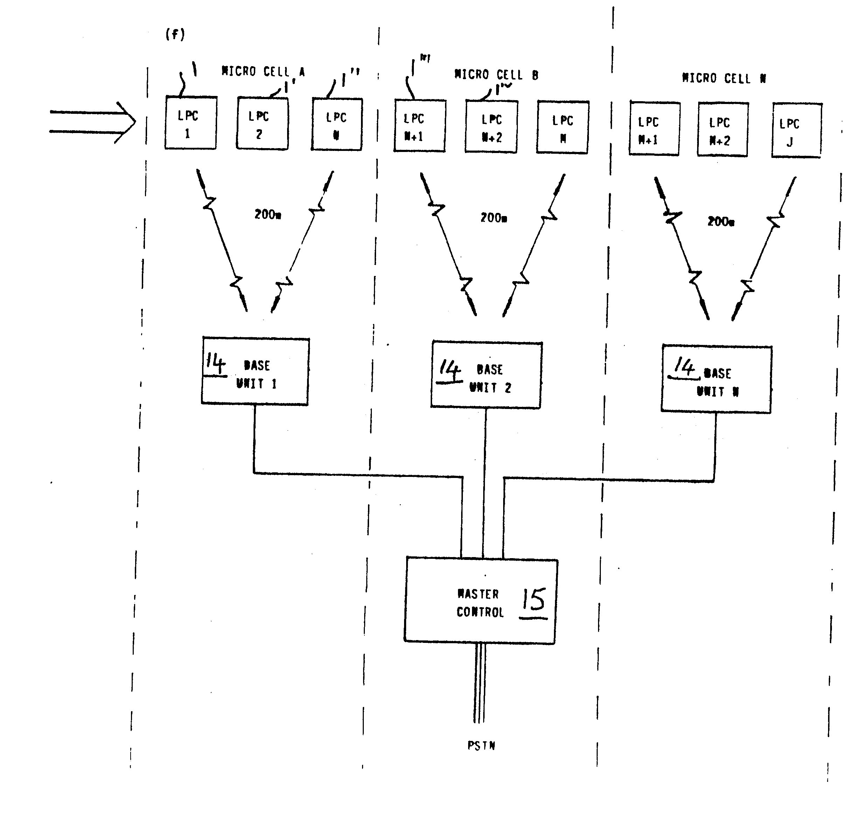

Figures 1a and 1b show six scenarios labelled a-f. The same LPC (1) can be used in each scenario, but alternatively, any LPC can communicate within the system. Thus, the LPC (1) can communicate with a base unit (3) which could be situated in the home or office provided it is in acceptable range. In this scenario (a), the LPC (1) and base unit (3) function similarly to a cordless telephone. However, when the LPC (1) is out of acceptable range of a base unit (3), then it can communicate through a transportable base unit (5) or a mobile base unit (7) or a modified unit (3') with the cellular network (9). The LPC is capable of communicating with any base unit (3,3',5,7,13 or 14) with which it is "registered" and is so constructed that it will locate and communicate with whichever base unit it is easiest to communicate with, and which it can most efficiently communicate with, depending on the type of communication required, e.g. "intercom" use with an adjacent LPC, or perhaps a call through the PSTN to a distant LPC.

A description of the interaction between the units now follows.

Frequency synthesis, i.e. frequency generation and stability of an LPC, is preferably achieved using a voltage controlled oscillator calibration technique as disclosed in our co-pending U.K.Patent Application No.8428159.

Before considering the operation of the various units, the basis of channel allocation is now explained. Due to the nature of a cellular radio system, only a fraction of the available frequencies are used in any one cell at any given time. The cellular radio service to be introduced in the U.K. will have 1000 channels at around 900 MHz frequency.

The use of a mobile or transportable base unit communicating simultaneously with an LPC and the cellular radio network introduces further constraints on the frequencies available due to intermodulation between base unit frequencies and cellular radio transmit frequencies. The two dominant effects are inter-modulation products and receiver blocking due to strong signal effects.

Each LPC/base unit is assigned a random selection of seven "primary" channels. The number of primary channels has been limited for the above reasons and also to conserve battery power and this number is chosen on the basis of the "7 cell" system architecture in which each frequency is used only once in the "7 cell" pattern. This then allows 6 primary channels to be used assuming the seventh to suffer from intermodulation. This random selection of primary channels is called the "primary register".

Initial registration of an LPC with a cordless base unit.

From manufacture, each LPC is uniquely addressed with a code word containing all data and information relating to access and control of that LPC. This information then has to be loaded into the correct base unit, which is completed in the following manner.

For registration of any LPC, all connections to the PSTN must be removed and the mains supply to the base unit connected. Removal of the PSTN connections and re-connection of the mains supply automatically starts the base unit scanning all 40 communication channels looking for an LPC that requires registering. An LPC user indicates a request to register by holding down the 'S = send' button on the LPC continuously and transmitting on a free channel its coded word. Upon registration a tone is transponded back to the LPC to indicate successful registration.

A call priority number is also assigned to the registration number on a first in, first out basis to direct all incoming calls to that LPC first. This number also corresponds to the home intercom extension number.

LPC call re-direction.

If a call is intercepted by an LPC which should be directed to somebody else, the 'O' button is pressed on the LPC to indicate the call hold mode. The wanted extension number is then dialled into the LPC and the send button pressed. A second communication channel is then set up between the base unit and the wanted LPC to enable conversation before the call is transferred. The 'O' button is then pressed again finally to transfer the call.

Although the send button must be pressed at the end of the dialled numbers, it is not used as the indication to start transmission. Channel seizure and digit transfer begin when the clear button is first pressed.

Operational procedure of the base unit with the LPC.

For the cordless system to operate correctly, it is necessary for the base unit and the LPC to search for a free channel for communication to take place. However, in non-commercial application, the possibility that all but one of the channels are in use is remote. The channel search procedure is also costly on battery power consumption, as it has to be repeated at regular intervals (every 2 seconds) to check for incoming calls.

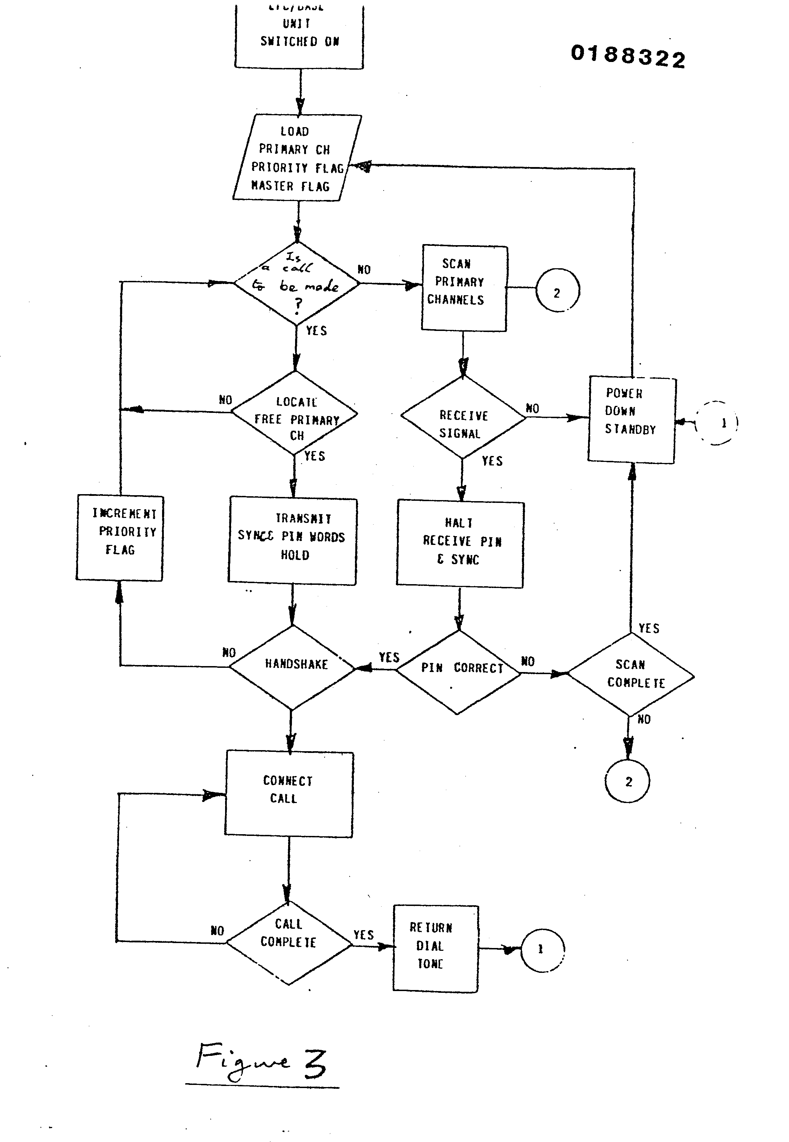

With the random selection of seven primary channels stored within the LPC and base unit, communication is established according to the flow diagram of Figure 3. This system has the advantage that in periods where scanning only is taking place the system is quiet in the sense that it does not handshake.

Because it is desirable to conserve battery power within the LPC, the base unit and LPC should only synchronise when a call is to be received (or made). The channel scan sequence must be repeated quite frequently such that the scan time is not greater than the on-channel access time, otherwise an incoming call could be missed.

This minimises the overhead information necessary and avoids the need to synchronise the LPC with all available base units.

If the system is being used as an intercom during an incoming call, the use of the intercom is interrupted and the call is initially directed to the LPC having the highest priority (the "Master" LPC).

Should the LPC move to the limit of its range while in communication with a base unit, then, by testing the signal strength, the LPC gives a warning in the form of, for example, a red light.

Cordless private branch exchange (PBX).

With the use of digital transmission and coding techniques, a logical extension of the home base unit (3) is to the small cordless PBX (13). Sizing of the PBX is not only governed by the number of lines to the PSTN, but also the density of people within a given area. Also to implement a true PBX, capacity for internal calls must also be allowed for, i.e. every internal call uses two radio communication channels.

The maximum number of radio channels that can be configured into a unit is forty and is therefore the maximum limit to the size of the PBX. Because the number of primary channels available for call set up within the LPC has been restricted to seven, a greatly increased number of the LPC's on the cordless PBX requires additional software to prevent the possibility of those seven channels being blocked until all or all but one of the forty channels are blocked.

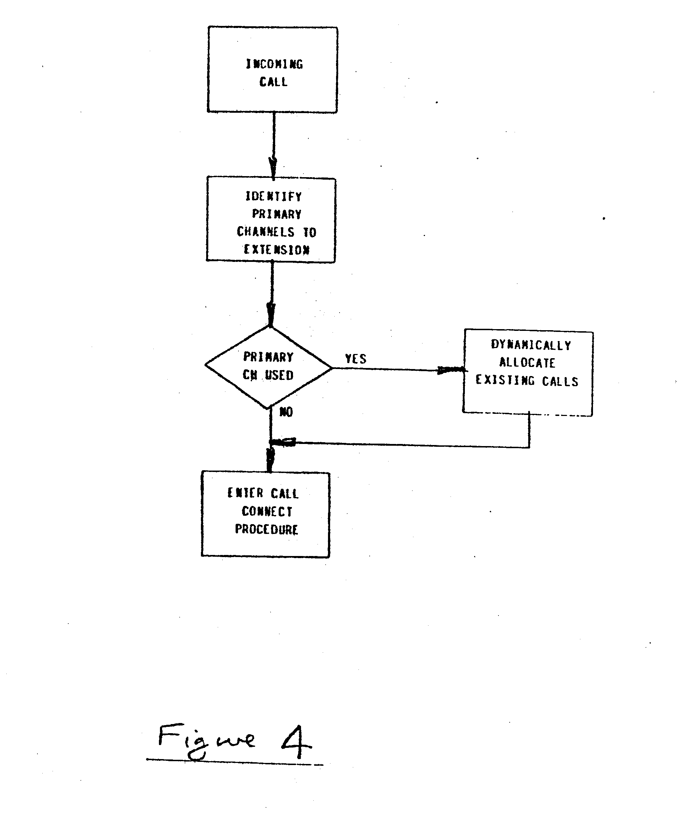

The additional software requirements for the control unit are shown in Figure 4. Because only seven primary channels are considered necessary to be assigned to each LPC, there is a need for the PBX unit (13) to be able to determine which of the connected calls should be moved to another channel, i.e. one which is not in the primary register of the wanted extension, so that a pair of primary channels can be scanned to communicate with the wanted LPC.

Each LPC now has to be identified as an extension. Registration of an LPC in conjunction with the PBX, is carried out by a similar process to that of the home base unit (3) except that an extension number is keyed in on a keypad provided before a registration button is pressed. The LPC then registers and is assigned the keyed-in extension number.

Because communication over a distance greater than 200 metres would almost certainly be required, except in compact situations, there will be a need for large factory sites and the like to interconnect cordless PBX units (14) to a master control unit (15) to provide what is in effect a micro-cell cordless system. The master control unit (15) could then act as a small telephone switchboard routing all incoming calls to each base unit (14) to find the required LPC (1) and then diverting the call to that base unit (14) when the required LPC (1) has been found.

Cellular radio.

By using the cordless telephone protocol as the defined interface between the LPC and base units, any combination of LPC and base unit scenario can be achieved. Given the intermodulation algorithms, and the channel currently being used for cellular communication, a decision can be made as to which of the primary channels could and could not be used.

The effects of receiver blocking due to strong signal effects caused by the cellular network transmitter must be considered when specifying the filtering for the mobile base unit (7) or transportable base unit (5).

Because the invention envisages the concept of a total communication system (as shown in Figures la and lb) there is also a requirement for the transportable base unit (5) which is for street use in urban and city areas to be lightweight, compact and have an internal battery supply. For the user with only limited resources, this base unit (5) could be modified slightly and could then be used in all three possible scenarios (excluding the large PBX);  the only special adaptation would be to provide a PSTN connection socket.

Registration between different cellular base units.

In a scenario where two cellular radio base units belong to the same subscriber, i.e. a mobile unit (7) and a transportable unit (5), care must be taken to ensure that they both do not register on the cellular system when they are both available.

So far, the system has been kept flexible in the sense that any number of LPC's can be used to respond to the appropriate base unit, provided they have been registered. This is again the case with the "cellular" base units, except that the LPC must also be registered with the cellular system operator. This is required because the LPC contains the necessary personal identification number (PIN) to enable access to the cellular radio system. The LPC registration number is chosen to be the same as this PIN number.

Initially, when the "cellular" base unit is purchased, it is supplied with a four figure identification number. This four figure number is loaded through the keyboard of the LPC. With receipt of the appropriate calibrate command, the LPC declares to the base unit its identification number and PIN words necessary for cellular access. When registration has been completed the base unit responds accordingly. This sequence is repeated for as many LPC units that are registered as cellular users.

However, because each LPC user is individually registered and charged accordingly by the system operator, nc more than one LPC unit can use a cellular base unit at any given time. Because there is within the system the flexibility for the user to move from one base unit configuration to another, additional constraints must be placed on the LPC so that it does not appear as "two" separate cellular radio users.

A most important feature of the invention is the choice of base unit by the LPC. Within a 200 metre radius, one or more of the base unit configurations (3,3',5,7,13,14,15) could belong to the same user. In this situation, the LPC needs to decide which is the most cost effective mode of communication because of the high overhead costs associated with using the cellular radio system. Priority must always be given to PSTN connections unless commanded (through the keypad) otherwise.

The LPC units are able to establish communication as previously described, but a choice still has to be made by the LPC as to with which base unit it should "handshake".

The term "handshake" is used to describe the exchange of address words between an LPC and a base unit which enables the two units to recognise each other and begin communication. The address word contains all the necessary information for access, control, security and synchronisation (SYNC); thus, in the case of the LPC, it contains the PIN number (registration number), SYNC number, priority flag, etc. as necessary and in the case of a base unit, it contains a selected LPC registration number and priority number of that LPC, etc., as necessary.

Where all three possible alternatives of base unit exist, i.e. base unit (3), portable unit (5) and mobile unit (7), within the range of an LPC, communication with the PSTN base unit would be established because priority is always given to PSTN connections.

The determination of priority is also shown by Figure 3. When the LPC makes the initial transmission of its address word, this word contains a priority flag and the priority flag is set at 1 (highest priority). If a PSTN base unit is within range, it will respond to that address word and handshake. If there is no PSTN base unit available (and handshaking is not achieved), then the priority flag is incremented to 2 and the new word is transmitted. Only a base unit of second priority (e.g. mobile unit) will respond on receiving this new word. This continues through the priorities.

With the cellular base units (5,7) there are further reasons in addition to warning the user in the normal way for determining when the LPC is out of range. First, the cellular base units (5,7) have their own battery, and power should be saved when the LPC is out of range. Normally, the cellular unit can be switched on to receive incoming calls, during which time it is registered on the cellular network but not accruing charges. If the LPC is out of range, then power is used unnecessarily in the standby mode. A power saving is achieved by the cellular base unit making a request, at, say, ten second intervals, to "handshake" with the LPC. If handshaking is not completed after, say 30 seconds, the LPC is assumed out of range and the base unit enters a power down mode. Handshaking in this test mode uses a different address word to that used when there is an incoming call, so that the LPC recognises that it is merely a test message.

A second reason for determining when the LPC is out of range applies when a call is in progress and the LPC moves out of range, then the cellular base unit must actively terminate the call so as to accrue no further charges for use of the cellular network and to avoid unnecessary loading of the network. Again, during the call, the LPC and base unit execute the handshaking routine at periodic intervals though the interval may be different from that of the idle mode. If handshaking is not completed, then the LPC is assumed out of range and again the base unit enters a power- down mode.  This time the call is lost.

If two combinations of base unit are within range, e.g. the mobile unit (7) and the portable unit (5), the LPC will only handshake with the unit of higher priority, which would be the unit (7).  The reason why this occurs is that when the mobile base unit (7) is in the standby mode it will be searching for its registered LPC users as it is programmed to do when idle.  Because it is in the vicinity of an operating portable base unit (5), the mobile unit (7) will recognise the handshaking procedure between the LPC and the portable unit (5) and synchronise with its transmissions.  At the appropriate time slot, it will interrupt the handshake procedure and notify the LPC that it is available for use.  The LPC will then handshake with the mobile base unit (7) because it is of higher priority and after the 30 second period, the portable base unit (5) will switch off, thus saving the battery.

After handshaking with the appropriate base unit, the PIN and other registration words are loaded into the base unit to enable registration onto the cellular network.  The transfer of the PIN, etc., then prevents any other LPC from using the base unit.  If, subsequently, the LPC moves out of range, the base unit cellular link will close down, as before, and the mobile base unit will enter the scan mode, as before, searching for any registered LPC users.

Further details of the control sequence and operation are shown by the flow diagram of Figure 3 which can readily be implemented by one skilled in the art in the form of a program for a microprocessor.

Referring to the receive cycle of that Figure, which starts with "Scan Primary Channel" and proceeds to "Pin Correct?" and "Handshake?", it will be seen that if handshake fails, then the program proceeds to "Increment Priority Flag".  While this is not the optimum procedure, in that it is not necessary to increment the priority flag during the receive cycle, it is an acceptable procedure.

Optionally, a base unit for use in a radio telephone network (e.g. a cellular base unit) may periodically transmit a signal to establish whether or not it can communicate with any particular LPC.

It will be understood that expressions relating to "cordless telephone" and communication between a base unit and an LPC are not restricted to radio communication but embrace any kind of cordless link, such as infra-red and ultra-sonic communication. In this specification, the phrase "personal communication terminal" has been used to embrace a communicator having any kind of cordless link and not necessarily being of low power.

The use of a radio link to the PCT has the advantage that in the United Kingdom, for example, the frequencies around 900MHz which are available for cordless telephones can be used and a low-cost, lightweight, portable unit is realisable because of the requirement for only minimal transmit power to achieve a useful, though limited, range of communication. Such a system has the advantages that use of the radio channels is "free", coverage is acceptable within buildings and it is possible to achieve high subscriber densities, including use by the consumer sector.

It will of course be understood that the present invention has been described above purely by way of example, and modifications of details can be made within the scope of the invention.

CLAIMS:

1.        Apparatus for use in a two-way cordless telephone communications system for speech and/or data, comprising at least one personal communication terminal (PCT) (1) for cordless communication with any one of a plurality of base units (3,3',5,7,13,14), said base units further providing communication to one or more telephone networks (9,10) either by means of radio (radio telephone network (9)) or land line or both, wherein at least one of the base units (3',5,7) is for use in a radio telephone network and wherein any such base unit uses a transmitter of a higher output power than the transmitter utilized by any said PCT (1).

2.        Apparatus as claimed in claim 1 wherein the PCT is arranged to select communication with one of the said plurality of base units, by means of a user-set or pre-set selection sequence, dependent on the availability of the said base units for communication.

3.        The invention as claimed in claim  1 or 2 wherein each of the said base units is either connectable solely to a telephone network (10) or solely to a radio telephone network (9).

4.        The invention as claimed in claim 1 or 2 wherein at least one of the said base units is connectable to a telephone network (10) and a radio telephone network (9).

5.        The invention as claimed in any preceding claim wherein the apparatus comprises at least three base units.

6.        The invention as claimed in any preceding claim wherein each base unit may communicate with more than one PCT either sequentially or simultaneously.

7.        The invention as claimed in any of the preceding claims wherein one of the base units is usable to provide some or all of the functions of a private branch exchange (PBX) (14,15).

8.          The invention as claimed in any of the preceding claims wherein two or more of the base units (14) are centrally controlled to provide some or all the functions of a PBX.

9.          The invention as claimed in any one of the preceding claims wherein the base units have different priorities and associated priority codes and wherein a PCT only communicates through a base unit having a lower priority code if it is unable to communicate through a base unit having a higher priority.

10.          The invention as claimed in claim 9 wherein any base unit (3,3',13,14) connectable to a telephone network has a higher priority than a base unit (5,7) for use in a radio telephone network (9).

11.          The invention as claimed in claim 10 wherein a hand-portable or transportable base unit (5) for use in a radio telephone network has a lower priority than a vehicle mounted base unit (7) for use in a radio telephone network.

12.          The invention as claimed in claims 9-11 wherein each PCT (1) has a facility to alter a base unit priority.

13.          The invention as claimed in any preceding claim wherein the telephone network (10) is a public switched telephone network.

14.          The invention as claimed in any of the preceding claims wherein the radio telephone network (9) is a cellular radio telephone network.

15.          The invention as claimed in claim 14 wherein the cellular radio telephone network is the U.K. TACS cellular radio telephone network.

16.          The invention as claimed in any one of claims 1-13 wherein the radio network is a private mobile radio network.

17.          The invention as claimed in any one of claims 1-12 or 14-16 wherein the telephone network is a private telephone network or a private branch exchange.

0188322

18.       Apparatus for use in a communication system substantially as hereinbefore described with reference to the accompanying drawings.

0188322

FIG. # 2

MINIMAL BASE UNIT CONFIGURATION

(FOR INTERCOM USE)

Figure 3

Figure 4